Europäisches Patentamt

European Patent Office

Office européen des brevets

(19)

(11) Numéro de publication: **0 107 540
B1**

(12) **FASCICULE DE BREVET EUROPEEN**

(45) Date de publication du fascicule du brevet:
**19.11.87**

(21) Numéro de dépôt: **83401864.0**

(22) Date de dépôt: **23.09.83**

(51) Int. Cl.⁴: **G 05 D 23/24,** F 25 B 49/00,
F 25 D 29/00, F 25 D 21/00

(54) **Dispositif électronique de commande pour une enceinte frigorifique et enceinte utilisant un tel dispositif.**

(30) Priorité: **24.09.82 FR 8216157**

(43) Date de publication de la demande:
**02.05.84 Bulletin 84/18**

(45) Mention de la délivrance du brevet:
**19.11.87 Bulletin 87/47**

(84) Etats contractants désignés:
**BE CH DE FR GB LI LU**

(56) Documents cités:
**DE - A - 3 022 713
FR - A - 2 348 451
US - A - 4 209 994
US - A - 4 283 921
US - A - 4 307 775
US - A - 4 325 223**

(73) Titulaire: **ETS BONNET, 117, rue Grenette,
F-69653 Villefranche sur Saone (FR)**

(72) Inventeur: **Frechet, Olivier, THOMSON-CSF SCPI 173 bld
Haussmann, F-75379 Paris Cedex 08 (FR)**

(74) Mandataire: **Phan, Chi Quy et al, THOMSON-CSF
SCPI 19, avenue de Messine, F-75008 Paris (FR)**

## Description

La présente invention concerne les enceintes frigorifiques en général telles que les chambres froides fermées ou les meubles frigorifiques ouverts utilisés pour la vente des produits frais ou surgelés.

L'invention concerne plus précisément les moyens mis en œuvre pour assurer la régulation thermique, l'opération de dégivrage, le déclenchement d'alarmes, etc...

Dans l'état actuel de la technique documents US-A-4 325 233, et FR-A-2 348 451 ces fonctions sont commandées selon des valeurs des températures mesurées par des sondes multiples, relativement onéreuses. Par ailleurs les techniques connues ne permettent pas, en pratique, d'évaluer l'état réel du givrage, de faire de la télécommande, du télécontrôle dans des conditions de simplicité et d'économie compatibles avec ce type de matériel.

Pour pallier ces inconvénients de l'art connu l'invention propose une unité de commande centralisée associée à une sonde thermique unique donnant des informations pour commande de la régulation et du dégivrage. Le document US-A-4 283 921 parait bien sa premier coup d'œil se passer également de la deuxième sonde thermique, mais ceci seulement parce que l'unique sonde n'entre pas en action lors du dègivrage, parce que ce dernier n'est effectué que manuellement par un opérateur.

L'invention est basée sur la constatation que les informations fournies par une même sonde de mesure de température sont utilisables pour commander à la fois le dégivrage et la régulation automatique à l'intérieur d'une enceinte. Bien entendu les informations fournies par cette sonde sont traitées de manière différente selon que l'on a à commander la régulation de température ou le dégivrage.

L'invention se rapporte donc à un dispositif de commande du dégivrage d'une enceinte frigorifique comprenant une sonde de mesure de température, notamment à la sortie de l'évaporateur, caractérisée en ce qu'elle comporte un moyen pour déterminer la vitesse de refroidissement lors du fonctionnement du compresseur de l'enceinte frigorifique, des moyens pour comparer cette vitesse à une valeur limite et pour déclencher le dégivrage dès que cette vitesse dépasse la valeur limite. En effet on a constaté que la vitesse de refroidissement en certains points, notamment à la sortie de l'évaporateur, est plus importante lorsqu'il se produit du givre que dans le cas contraire, c'est-à-dire en l'absence de givre. Une explication possible de ce phénomène est la suivante: l'air est freiné par les rugosités que présente la surface du givre et subit donc une perte de charge, ce qui provoque un refroidissement moins efficace de l'enceinte alors qu'au contraire, à proximité de l'évaporateur, le refroidissement s'effectue plus rapidement.

Dans une réalisation la sonde est disposée à proximité de la sortie de l'évaporateur, par exemple dans l'air.

La machine frigorifique est de préférence du type à circulation d'air forcée (à l'aide d'un ventilateur) ou naturelle.

Il peut arriver qu'immédiatement après le dégivrage la vitesse de refoidissement à la sortie de l'évaporateur soit du même ordre de grandeur que la vitesse de refroidissement en cas d'apparition du givre. Dans ce cas il est nécessaire d'inhiber les moyens de dégivrage pendant un temps déterminé, par exemple de l'ordre d'une demieheure, après la fin du dégivrage.

Ce procédé présente l'avantage de ne nécessiter qu'une seule sonde de mesure de température pour commander le dégivrage.

L'invention se rapporte également à un dispositif électronique de commande de fonctionnement d'une enceinte frigorifique comprenant des moyens de mesure de la température dans cette enceinte et des moyens de régulation de la température de l'enceinte en fonction de la température mesurée par lesdits moyens ainsi qu'un dispositif de commande du dégivrage du type défini ci-dessus, caractérisé en ce que les moyens de mesure de la température sont constitués par une sonde unique de la mesure de la température à l'intérieur de l'enceinte pour les moyens de régulation et le dispositif de dégivrage.

L'invention sera mieux comprise et d'autres caractéristiques et avantages apparaîtront à l'aide de la description qui suit en référence aux figures annexées parmi lesquelles:

– la figure 1 illustre le schéma général d'un dispositif électronique auquel s'applique l'invention,
– la figure 2 illustre un exemple de réalisation concrète d'un dispositif comportant un système de dégivrage préprogrammé manuellement.
– la figure 3 illustre un exemple de réalisation d'un dispositif selon l'invention comportant un système de dégivrage automatique déclenché en fonction des besoins réels de dégivrage.
– la figure 4 illustre une vue en coupe d'une chambre froide équipée d'une dispositif électronique selon l'invention.

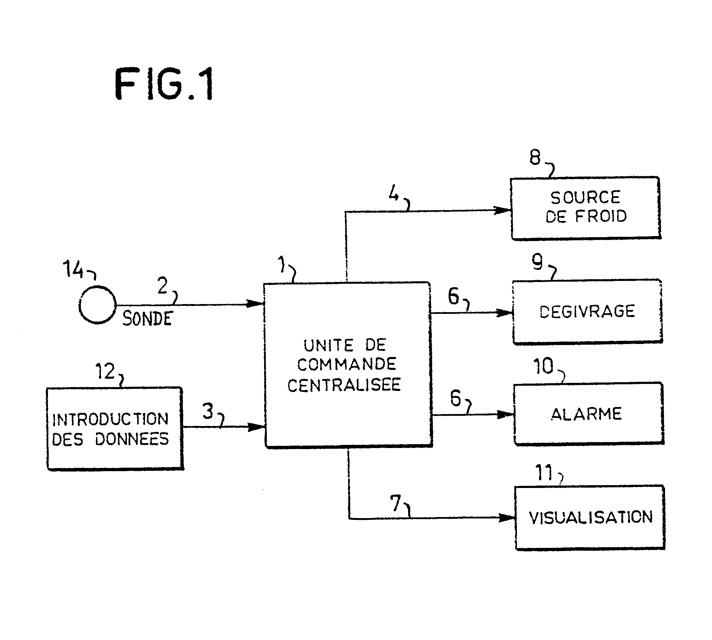

La figure 1 illustre le schéma général du dispositif électronique selon l'invention. Une unité de commande centralisée 1 comporte des entrées 2 et 3 et, dans cet exemple, des sorties 4, 5, 6 et 7. Ces quatres sorties peuvent être respectivement connectées à une source de froid 8, à un dispositif de dégivrage 9, à un système d'alarme 10 et à un système d'affichage 11. L'unique unité de commande centralisée 1 gère l'ensemble des fonctions 8, 9, 10 et 11 de l'enceinte. L'élément 12 relié au point d'entrée 3 de l'unité 1 comporte des organes permettant à l'utilisateur d'introduire des instructions telles que les températures de fonctionnement et d'alarme certaines valeurs de seuil nécessaires au dégivrage et éventuellement les heures de dégivrage avec leurs durées limites. Une sonde de température 14, placée dans l'enceinte, est reliée au point d'entrée 2 de l'unité 1. Selon l'invention on n'utilise qu'une seule sonde de température 14 pour l'ensemble des fonctions 8, 9, 10 et 11, notamment pour les fonctions 8 (régulation de la température de l'enceinte) et 9 (dégivrage). Le système d'affichage 11 peut indiquer des températures ou des message utiles au personnel d'entretien.

Dans l'art connu une horloge préprogrammée déclenche, en général, l'opération de dégivrage plusieurs fois par jour.

La préprogrammation des heures de dégivrage est faite par l'utilisateur sur la base empirique de l'expérience. Un dégivrage est coûteux en énergie car il faut réchauffer l'enceinte, généralement avec des cannes chauffantes, pour faire fondre le givre puis déclencher une longue période de refroidissement pour retrouver la température minimale d'exploitation. Les conditions de givrage dépendent par ailleurs de la quantité de marchandises, de l'humidité de l'air, de la température d'évaporation, etc. Le dégivrage à heures fixes n'est pas optimal et il serait souhaitable de pouvoir faire une mesure physique de l'état réel de givrage de façon simple et économique de manière à ne déclencher le dégivrage qu'en cas de réelle nécessité. C'est un autre aspect de l'invention de proposer une telle possibilité de dégivrage. En effet il existe une relation entre la vitesse de refroidissement en certains points (tel que la sortie de l'évaporateur) de l'enceinte et l'état de givrage. L'unité de commande centralisée 1 peut aisément évaluer cette vitesse de refroidissement et déclencher le dégivrage en conséquence. A cet effet l'unité 1, qui est par exemple un microprocesseur, est programmée de façon à mesurer périodiquement, dans une réalisation toutes les cinq minutes, la vitesse de refroidissement de la sonde 14 lorsque le compresseur de l'enceintre frigorifique est en fonctionnement. A cet effet on mesure la baisse de température détectée par la sonde pendant un intervalle de temps déterminé, par exemple dix secondes. Lorsque l'enceinte n'est pas givrée ou peu givrée cette vitesse, c'est-à-dire cette baisse de température pendant un temps déterminé, est inférieure à une limite; par contre on observe une nette augmentation de cette vitesse à partir d'un état de givrage prohibitif. Le givrage est donc commandé lorsque la vitesse de refroidissement dépasse une limite prédéterminée. Toutefois il peut arriver qu'immédiatement après l'opération de dégivrage la vitesse de refroidissement atteigne ou dépasse cette limite; dans ce cas il n'est bien entendu pas nécessaire de commander de nouveau la mise en service de l'opération de dégivrage; c'est pourquoi on prévoit, par la programmation de l'unité 1, d'inhiber la commande de mise en service du dégivrage pendant une durée déterminée, par exemple de l'ordre d'une demieheure, après la fin de l'opération de dégivrage.

L'unité de commande centralisée unique assure le fonctionnement des diverses fonctions de l'enceinte frigorifique; ladite unité est associée à une sonde de température également unique.

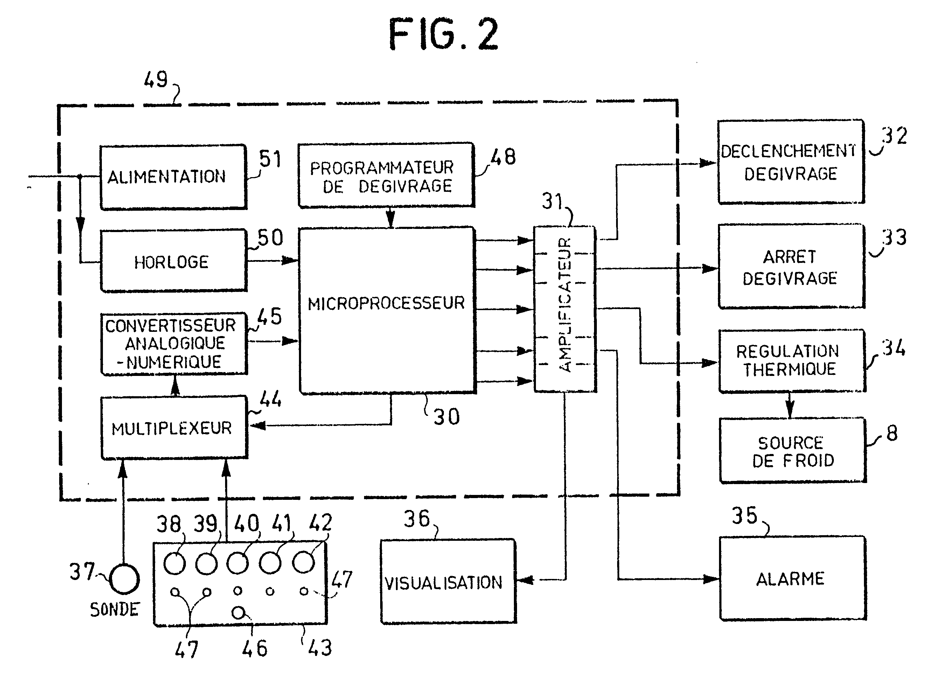

– la figure 2 illustre un exemple de réalisation d'un dispositif selon l'invention comportant un système de dégivrage préprogrammé qui ne fait pas appel à la mesure de la vitesse de refroidissement. Un microprocesseur 30 commande à travers un ensemble d'amplificateurs séparés disposés sur un même substrat 31 une fonction 32 qui déclenche l'opération de dégivrage, une fonction 33 qui interrompt l'opération de dégivrage, une fonction 34 qui assure la régulation de température de l'enceinte en agissant sur la source de froid 8, une fonction 35 qui déclenche un dispositif d'alarme et enfin un dispositif 36 de visualisation.

L'ensemble 31 comprend des amplificateurs logiques de puissance utilisés essentiellement pour commander des relais; ces amplificateurs comportent également des filtres qui protègent le microprocesseur 30 contre les parasites en provenance des organes de puissance représentés par les fonctions de sortie. Les fonctions 32, 33, 34 et 35 sont connues de l'homme de métier et sont extérieures au cadre de l'invention qui propose une unité de commande centralisée, disposée de préférence dans un boîtier séparé, dont le rôle est précisément d'assurer la commande desdites fonctions. Dans cette réalisation le dispositif de visualisation 36 comporte deux éléments à sept segments et un élément pour les signes + et –; il peut afficher des chiffres pour indiquer une températeure ou des lettres pour une phase de fonctionnement (DE pour dégivrage par exemple). Selon l'invention on programme le microprocesseur de façon à commander l'affichage d'informations utiles aux personnels d'entretien et d'exploitation. La sonde unique de température 37 est, dans cette réalisation, une thermistance c'est-à-dire une résistance dont la valeur dépend de la température; elle indique la température à l'intérieur de l'enceinte frigorifique.

Cinq résistances réglables servant à afficher les températures de fonctionnement sont représentées par les potentiomètres 38, 39, 40, 41 et 42 disposés sur la console 43. Les six valeurs de résistances précitées (la sonde et les cinq potentiomètres) sont commutées dans un ordre qui peut être variable et sur décision du microprocesseur 30 vers un convertisseur analogique-numérique 45 au moyen d'un organe de sélection 44 du type multiplexeur. Le convertisseur analogique-numérique 45 transforme la valeur des résistances en grandeurs électriques analogiques proportionnelles puis en valeurs numériques qui sont mises en mémoire ou non, selon le cas, par le microprocesseur 30. Les cinq températures préaffichées sont, dans cette variante de l'invention, les deux températures limites de la plage de fonctionnement choisie, la temperature à laquelle le dégivrage doit cesser, la température pour laquelle il y a réarmement du dispositif de dégivrage et la température devant déclencher l'alarme. Un poussoir 46 permet, par pressions successives, de sélectionner l'un des potentiomètres 38, 39, 40, 41 ou 42. Le potentiomètre sélectionné est visualisé par l'excitation d'une diode électroluminescente 47 corespondante. Lorsqu'un potentiomètre est sélectionné la température correspondant à son réglage apparaît sur le dispositif de visualisation 36.

Le bloc 48 permet de programmer le dégivrage à heures fixes, par exemple trois fois par jour dans les meubles frigorifiques de vente. Cette fonction est, dans cette variante de l'invention, située dans un boîtier 49 (représenté en trait tireté sur la figure 2) qui contient l'unité de commande centralisée. Cette fonction 48 de programmation de dégivrage comporte essentiellement un affichage numérique indiquant, sur commande, le temps de 0 à 24 heures en défilement rapide et un bouton d'arrêt du défilement qui met en mémoire l'heure affichée correspondante. Il est possible dans le cas présent de mettre en mémoire au maximum les heures de huit dégivrages successifs à l'intérieur d'un cycle de 24 heures. Pour que, compte tenu de l'heure locale, les dégivrages aient lieu aux heures prévues, l'unité de commande centralisée doit posséder une horloge de référence. Une base de temps 50 constitue cette horloge qui fonctionne, selon une technique connue, par divisions succesives de la fréquence 50 Hz du réseau. Si la base de temps propre de l'unité de commande est stabilisée par quartz, cette dernière peut avantageusement servir d'horloge de référence. Le bloc 51 est une alimentation régulée pour l'ensemble des éléments situés dans le boîtier 49. Ces éléments sont d'usage courant.

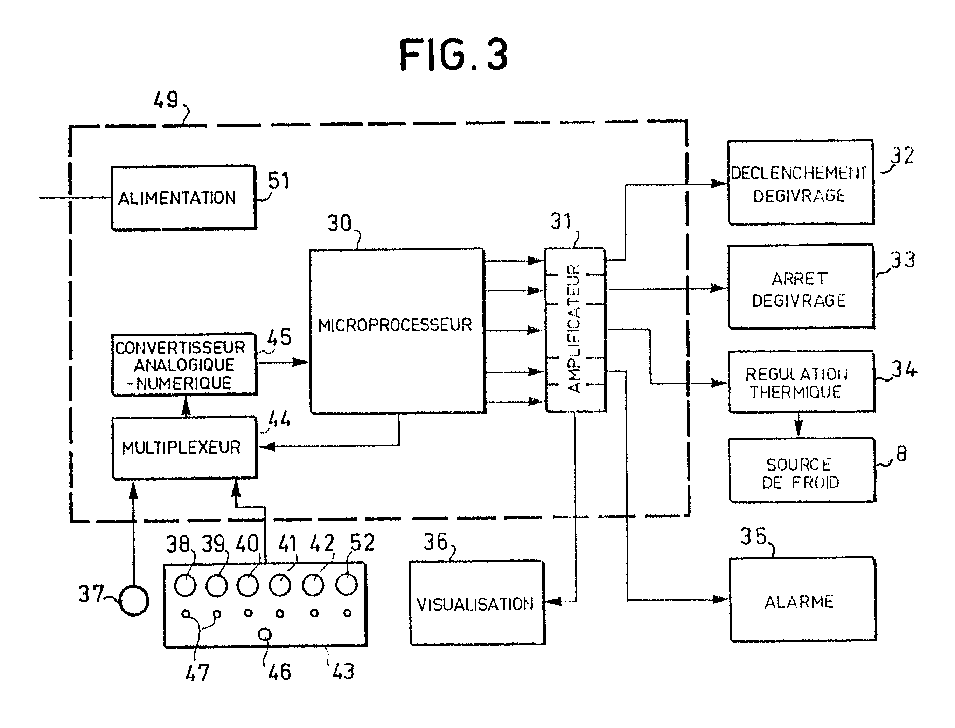

La figure 3 illustre un exemple de réalisation d'un dispositif selon l'invention comportant un système de dégivrage automatique déclenché en fonction des besoins réels de dégivrage. Les éléments portant les mêmes références que sur la figure 2 remplissent les mêmes fonctions et ne sont pas décrits une seconde fois. Comme déjà mentionné dans une enceinte frigorifique, un givrage excessif de l'évaporateur peut être détecté notamment par une brutale augmentation de la vitesse de refroidissement en certains points; par exemple juste en aval de l'évaporateur. L'utilisation, selon un aspect essentiel de l'invention, de circuits électroniques permet d'évaluer facilement cette vitesse de refroidissement. Dans cette variante préférée comportant un microprocesseur, une séquence simple d'instructions placée dans le logiciel effectue ce calcul. La connaissance de la vitesse de refroidissement donc de l'état de givrage ne suffit pas pour déclencher l'opération de dégivrage, il faut connaître aussi le seuil de givrage au delà duquel l'opération de dégivrage doit être effectuée. Ce seuil de givrage (auquel correspond la limite de vitesse indiquée ci-dessus) peut être indiqué comme grandeur fixe dans le programme. Dans la variante de l'invention décrite ici le seuil de dégivrage est ajustable et préaffiché par l'utilisateur. Un sixième potentiomètre 52 placé sur la console 43 assure cette fonction.

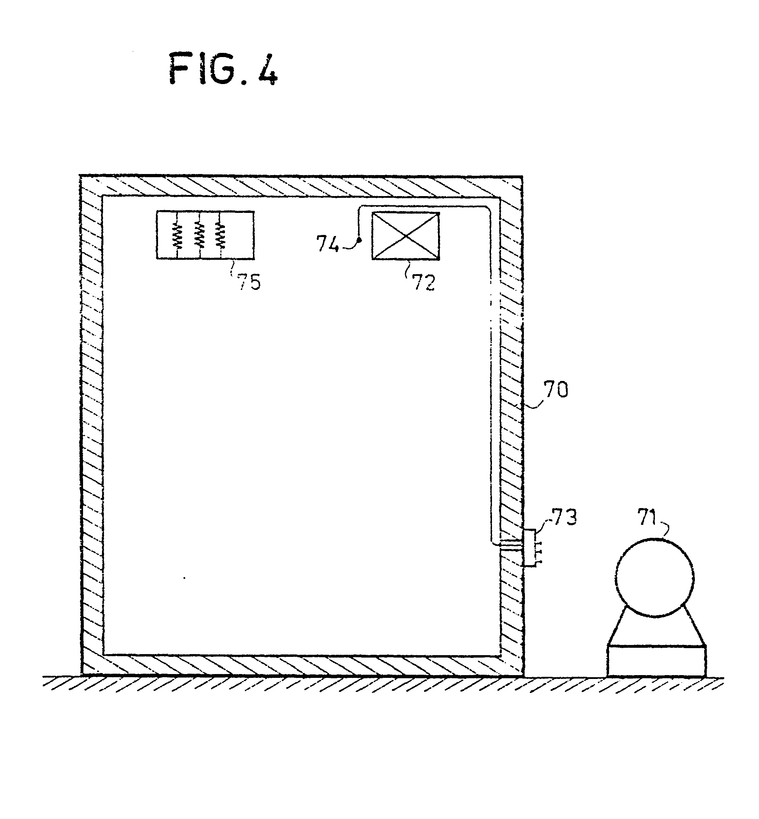

La figure 4 illustre une vue en coupe d'une chambre froide équipée d'une unité de commande centralisée selon l'invention. Une paroi 70 en matériau thermiquement isolant sépare l'intérieur de l'enceinte du milieu extérieur.

Un compresseur 71 fournit un fluide réfrigérant à une batterie d'évaporateurs 72 située dans l'enceinte. L'enceinte comporte d'une part un boîtier 73 qui contient l'unité de commande centralisée et d'autre part une sonde de température unique 74. Dans cette variante de réalisation, les organes de préaffichage des températures et le dispositif de visualisation sont solidaires du boîtier 73. En situation normale le dispositif de visualisation indique la température à l'intérieur de l'enceinte. Un dispositif à dissipation thermique (chauffage) 75 accélère l'opération de dégivrage.

Le tableau I placé en fin de la présente description résume les caractéristiques et performances obtenues dans un exemple de réalisation.

Les dispositifs qui viennent d'être décrits ne sont que deux des combinaisons de moyens possibles mettant en œuvre l'invention.

A titre d'exemples d'autres moyens peuvent être utilisés séparément ou en combinaisons sans sortir du cadre de l'invention:

– Tout dispositif thermo-sensible produisant directement ou non un signal électrique peut être utilisé comme sonde de température.
– Le microprocesseur peut être remplacé par des fonctions logiques cablées.
– Les températures préaffichées peuvent être introduites directement sous forme digitale (par exemple par arrêt d'un compteur à défilement ou par clavier), le sélecteur d'entrée (multiplexeur) et le convertisseur analogique-numérique pouvant alors être supprimés.
– Des systèmes d'affichage tels que des lampes de couleurs différentes associées ou non à des étiquettes, un dispositif à cristaux liquides, un écran de télévision, peuvent être utilisés.
– Un dégivrage au choix préprogrammé ou automatique peut être réalisé à l'aide d'un selecteur de modes.
– Une mise en mémoire des dates limites de vente des produits et le déclenchement d'un signal lorsque ces dates sont atteintes peuvent facilement être réalisés.

L'unité de commande centralisée selon l'invention présente les avantages suivants:

– On prévoit un boîtier unique sur lequel sont raccordés tous les câbles électriques de l'enceinte.
– L'unité centralisée réduit le nombre d'organes et de ce fait le nombre de câbles qui les relient.
– L'emploi d'une sonde de température unique permet de gagner du temps lors du montage de l'appareil et de réduire les risques d'erreur et de pannes.
– La possibilité d'effectuer un dégivrage limité aux besoins réels constitue une économie substantielle d'énergie et simplifie les conditions d'exploitation de l'appareil.
– L'introduction de circuits électroniques apporte une simplification, une réduction du coût, une meilleure fiabilité.
– L'introduction de circuits logiques permet d'appliquer les possibilités offertes par l'informatique telles que l'affichage, le stockage et l'introduction d'instructions diverses. La gestion centralisée d'un ensemble d'enceintes frigorifiques peut être envisagée.

## Tableau I

Caractéristiques et performances obtenues dans un exemple de réalisation typique.

Composants:
microprocesseur: COP 421L National
Semiconducteur
multiplexeur analogique: CD 4051
convertisseur analogique-numérique:
TL 507 Texas
sonde: Résistance CTN-1M5001B3 de 5000 ohms à 25°C
amplificateur: SN 75492 Texas

Performances:
Plage de régulation: de –40 à +25°C

Précision de régulation: +1°C

Température de fin de dégivrage: Réglable entre 0°C et 20°C
    Valeur typique: +5°C

Température de réarmement du système de dégivrage: Réglable entre 3 et 20 degrés en dessous du point de consigne de la température de fin de dégivrage
    Valeur typique: –5°C

Température d'alarme: Réglable entre –20°C et +10°C
Valeur typique: –15°C pour conservation de denrées surgelées.

## Revendications

1. Dispositif de commande du dégivrage d'une enceinte frigorifique comprenant une sonde de mesure de température (14; 37), notamment à la sortie de l'évaporateur, caractérisé en ce qu'il comporte un moyen pour déterminer la vitesse de refroidissement lors du fonctionnement du compresseur (71) de l'enceinte frigorifique (70), des moyens pour comparer cette vitesse à une valeur limite et pour déclencher le dégivrage dès que cette vitesse dépasse la valeur limite.

2. Dispositif selon la revendication 1, caractérisé en ce qu'il comporte un moyen pour inhiber la mise en service du dégivrage pendant un temps déterminé, par exemple de l'ordre d'une demi-heure, après la fin d'une opération de dégivrage.

3. Dispositif selon la revendication 1 ou 2, caractérisé en ce que la sonde de mesure de température (14; 37) est également utilisée pour la régulation de la température de l'enceinte (70).

4. Dispositif selon l'une quelconque des revendications précédentes, caractérisé en ce que la sonde (14; 37) est disposée à la sortie de l'évaporateur de l'enceinte frigorifique (70).

5. Dispositif électronique de commande de fonctionnement d'une enceinte frigorifique (70) comprenant des moyens de mesure de la température dans cette enceinte et des moyens de régulation de la température de l'enceinte en fonction de la température mesurée par lesdits moyens ainsi qu'un dispositif de commande du dégivrage selon la revendication 1, caractérisé en ce que les moyens de mesure de la température sont constitués par une sonde unique (14, 37) de mesure de la température à l'intérieur de l'enceinte pour les moyens de régulation (8, 34) et le dispositif de dégivrage (9, 33).

6. Dispositif selon la revendication 5, caractérisé en ce qu'il comporte un microprocesseur (1) exploitant les données fournies par la sonde unique pour commander la régulation de température et le dégivrage.

7. Dispositif selon la revendication 5 ou 6, caractérisé en ce que la sonde unique (14) est une thermistance.

8. Dispositif selon l'une quelconque des revendications 5 à 7, caractérisé en ce qu'il comporte un système d'introduction de données (12) à clavier alpha-numérique représentant des valeurs de consigne pour les commandes, notamment de régulation et de dégivrage.

9. Dispositif selon l'une quelconque des revendications 5 à 8, caractérisé en ce qu'il comporte un système d'introduction de données (12) de consigne, notamment pour la commande de la régulation et du dégivrage, à résistance réglable (38, 42) dont la valeur définit la grandeur de la donnée à introduire.

10. Dispositif selon la revendication 9, caractérisé en ce qu'il comporte un multiplexeur (44) et un convertisseur analogique-numérique (45) en cascade pour connecter séquentiellement les résistances réglables et la sonde unique (14) à une unité de commande centralisée (1).

11. Dispositif selon l'une quelconque des revendications 5 à 10, caractérisé en ce qu'il comporte des moyens de visualisation (11) pour l'affichage de valeurs de consigne, de la température de l'enceinte, ou de messages associés à des états de fonctionnement de l'enceinte.

12. Enceinte frigorifique, caractérisée en ce qu'elle comporte un dispositif de commande selon l'une quelconque des revendications précédentes.

## Patentansprüche

1. Vorrichtung zur Entfrostungssteuerung eines Kühlraums mit einer Temperaturmesssonde (14; 37), insbesondere am Ausgang des Verdampfers, dadurch gekennzeichnet, dass sie ein Mittel zum Bestimmen der Kühlgeschwindigkeit während dem Betrieb des Kompressors (71) des Kühlraums (70) und Mittel zum Vergleichen dieser Geschwindigkeit mit einer Grenzgeschwindigkeit und zum Auslösen des Entfrostens enthält, wenn diese Geschwindigkeit den Grenzwert überschreitet.

2. Vorrichtung nach Anspruch 1, dadurch gekennzeichnet, dass sie ein Mittel zum Verzögern der Inbetriebnahme des Entfrostens während einer bestimmten Zeit, z.B. im Bereich einer halben Stunde, nach dem Ende eines Entfrostungsvorgangs, enthält.

3. Vorrichtung nach Anspruch 1 oder 2, dadurch gekennzeichnet, dass die Temperaturmesssonde (14; 37) gleichermassen zur Temperaturregelung des Kühlraums (70) verwendet wird.

4. Vorrichtung nach einem der vorigen Ansprüche, dadurch gekennzeichnet, dass die Sonde (14; 37) am Ausgang des Verdampfers des Kühlraums (70) angebracht ist.

5. Elektronische Betriebssteuervorrichtung eines Kühlraums (70) mit Vorrichtungen zum Messen der Temperatur in diesem Kühlraum und Vorrichtungen zur Regelung der Kühlraumtemperatur in Abhängigkeit von der von besagten Vorrichtungen gemessenen Temperatur sowie einer Entfrostungssteuerung nach Anspruch 1, dadurch gekennzeichnet, dass die Temperaturmessvorrichtungen aus einer einzigen Sonde (14, 37) zur Messung der Temperatur im Inneren des Kühlraums für die Regelvorrichtungen (8, 34) und die Entfrostungsvorrichtung (9, 33) bestehen.

6. Vorrichtung nach Anspruch 5, dadurch gekennzeichnet, dass sie einen Mikroprozessor (1) enthält, der die von der einzigen Sonde gelieferten Daten auswertet, um die Temperaturregelung und die Entfrostung zu steuern.

7. Vorrichtung nach Anspruch 5 oder 6, dadurch gekennzeichnet, dass die einzige Sonde (14) ein Termistor ist.

8. Vorrichtung nach einem der Ansprüche 5 bis 7, dadurch gekennzeichnet, dass sie ein System zur Eingabe der Daten (12) mit alphanumerischer Tastatur enthält, die die Sollwerte für die Steuerungen, vor allem der Regelung und der Entfrostung, darstellen.

9. Vorrichtung nach einem der Ansprüche 5 bis 8, dadurch gekennzeichnet, dass sie ein System zur Eingabe der Sollwertdaten (12), insbesondere für die Steuerung der Regelung und der Entfrostung, mit einstellbaren Widerständen (38, 42) enthält, deren Wert die Grösse der Eingabedaten festlegt.

10. Vorrichtung nach Anspruch 9, dadurch gekennzeichnet, dass sie einen Multiplexer (44) und einen Analog/Digital-Umsetzer in Kaskade (45) enthält, um die einstellbaren Widerstände und die einzige Sonde (14) sequentiell mit einer zentralen Steuereinheit (1) zu verbinden.

11. Vorrichtung nach einem der Ansprüche 5 bis 10, dadurch gekennzeichnet, dass sie Anzeigevorrichtungen (11) zum Anzeigen der Sollwerte, der Kühlraumtemperatur oder von mit den Betriebszuständen des Kühlraums verbundenen Daten enthält.

12. Kühlraum, dadurch gekennzeichnet, dass er eine Steuervorrichtung nach einem der vorigen Ansprüche enthält.

**Claims**

1. Defroster control device of a refrigerator room comprising a temperature measurement probe (14; 37), in particular at the output of the evaporator, characterized in that it comprises means for determining the refrigerating speed of the refrigerator room (70) in operation of the compressor (71), means for comparing this speed to a limit value and for triggering the defrosting as soon as this speed exceeds the limit speed.

2. Device according to claim 1, characterized in that it comprises means for inhibiting the defrosting function during a determined time, for example of the order of half an hour, after the end of a defrosting operation.

3. Device according to claim 1 or 2, characterized in that the temperature measurement probe (14; 37) is likewise used for the temperature control of the room (70).

4. Device according to any of the preceding claims, characterized in that the probe (14; 37) is located at the output of the evaporator of the refrigerator room (70).

5. Electronic control device for controlling the operation of a refrigerator room (70), comprising means for measuring the temperature within this room and means for controlling the room temperature in dependence upon the temperature measured by said means, as well as a defroster control device according to claim 1, characterized in that the temperature measurement means are formed by a single probe (14, 37) for measuring the temperature within the room associated with the control means (8, 34) and the defroster device (i, 33).

6. Device according to claim 5, characterized in that it comprises a microprocessor (1) processing the data supplied by the single proble to control the temperature and the defrosting.

7. Device according to claim 5 or 6, characterized in that the single probe (14) ist a thermistor.

8. Device according to any of claims 5 to 7, characterized in that it comprises a system for data introduction (12) with an alphanumeric keyboard representing the set values for the controls, in particular the temperature control and the defrosting.

9. Device according to any of claims 5 to 8, characterized in that it comprises a system for introducing set data (12), in particular for the temperature control and defrosting control, with an adjustable resistor (38, 42) the value of which defines the amplitude of the data to be introduced.

10. Device according to claim 9, characterized in that it comprises a multiplexer (44) and an analog-digital converter (45) mounted in cascade for sequentially connecting the adjutable resistors and the single probe (14) with a centralized control unit (1).

11. Device according to any of claims 5 to 10, characterized in that it comprises visualization means (11) for displaying the set values, the temperature within the room or messages associated with the operating states of the room.

12. Refrigerator room, characterized in that it comprises a control device according to any of the preceding claims.

# FIG.1

# FIG. 2

# FIG.3

ALIMENTATION 51

MICROPROCESSEUR 30

CONVERTISSEUR ANALOGIQUE - NUMERIQUE 45

MULTIPLEXEUR 44

AMPLIFICATEUR 31

DECLENCHEMENT DEGIVRAGE 32

ARRET DEGIVRAGE 33

REGULATION THERMIQUE 34

SOURCE DE FROID 8

49

37

38 39 40 41 42 52

47 46 43

VISUALISATION 36

ALARME 35

0 107 540

13

# FIG. 4